# EUROPEAN PATENT SPECIFICATION

(11) **EP 1 051 834 B1**
(45) Date of publication and mention of the grant of the patent: **02.07.2003**
(21) Application number: 99904278.1
(22) Date of filing: 27.01.1999
(51) Int. Cl.: H04M 7/00

(54) **CALL SETUP FOR IP/INTERNET TELEPHONY**
VERBINDUNGSAUFBAU FÜR IP/INTERNET TELEFONIE
ETABLISSEMENT D'APPEL POUR TELEPHONIE IP/INTERNET

(30) Priority: 27.01.1998 US 72649 P
(43) Date of publication of application: 15.11.2000
(73) Proprietor: Thomson Licensing S.A., 92648 Boulogne Cedex (US)
(72) Inventor: POLIT, Peter, Paul, Indianapolis, IN 46236 (US); LI, Wenhua, Brownsburg, IN 46112 (US)
(74) Representative: Kohrs, Martin
(86) International application number: US9901600
(87) International publication number: WO99038310

(56) References cited:
- EP-A- 0 758 175
- EP-A- 0 781 016
- WO-A-98/11704
- WO-A-99/00954

## Description

### Field of the Invention

The present invention generally relates to a method for providing a voice connection over an IP (Internet Protocol) network such as the Internet. In particular, the present invention relates to a method of automatic call setup and call alerting by utilizing distinctive ring patterns or caller ID information.

### Background of the Invention

One of the primary reasons for interest in offering IP/internet telephony services is the pricing structures currently in place for the data service, and voice service offered by telephone operators. Long distance voice service can be thought of as "demand data" service, where the user pays a premium for the instantaneous access to a 64Kbps channel (voice grade channel in the US). Widely publicized, promotional type pricing for this service is on the order of $.10 a minute. By contrast, data service offered by telephone operators, such as that offered for a T-1 connection (24 voice quality data lines, for a 1.544 Mbps connection) is priced at approximately $1000/month, which works out to $.001 a minute per voice line. In the very near future, cable operators will place extreme pressure on even the data service rates for telephone operators, as cable modems will allow cable operators to offer hundreds of Kbps effective throughput for approximately $50/month.

IP telephony is also one of the first and most visible steps toward an Integrated Services Internet, which carries real time data, voice and video.

The basic idea of IP/internet voice telephony is to digitize your voice as you talk on the phone and send the digitized data as IP packets to the Internet. An IP voice device can be embedded within an Internet connection device such as a modem, a set-top-box, or a computer. It can be also built as a stand alone product. The stand alone IP voice device, for example, may provide an Ethernet jack which can be connected with an Internet connection device and other LAN devices. The IP voice device may also include interfaces to connect regular phone handsets. The quality of speech heard through a normal telephone line requires 64kbits/s bandwidth. However, most current internet connections have less bandwidth, such as 28.8kBPS, or 56kBPS modem. Furthermore, even if a fast connection device is used, such as an ISDN, or Cable Modem, the Internet network itself is a shared medium and has limited bandwidth. Therefore, audio codecs are usually embedded to compress the voice data.

To guarantee the interoperability between IP voice devices from different vendors, International Telecommunications Union (ITU) developed H.323 as the standard for telephony over IP network.

H.323 defines common procedures for call setup, data compression, and data transport.

H.323 is an umbrella standard which references many other ITU recommendations. It provides various levels of multimedia communications. These levels include voice only, voice and video, voice and data, or voice, video, and data communications over a local area network. The voice only H.323 protocol stack includes RTP/RTCP, RAS/Q.931 (H.225.0), and H.245. RTP/RTCP is used for packetization and synchronization of voice data. RAS/Q.931 describes the call registration, admission, and status as well as call signalling. H.245 defines the control messages and procedures.

In a general sense, IP telephony can be thought of as providing a "virtual" point to point connection for voice services over Internet. Various IP telephony devices currently exist in the marketplace. Some examples include VocalTec® Internet Phone® Lite which is a software product to be used in a multimedia PC, made by Vocaltech Corporation of Northvale, NJ. Other examples of product include CoolTalk of Netscape or NetMeeting of Microsoft. Most of these software based products reside in a client server such as a PC or a network computer (NC) that require a microphone, speaker and a sound card. Other products comes in the form of a handset, which basically incorporates the function of the microphone and speaker in the software-based product.

As an example of how to place a call, suppose a user in Indianapolis wants to call his friend in Paris. He would pick up his IP voice device handset (or a virtual handset on the computer screen) and hear a dial-tone like a regular telephone dial-tone. Then, he dials his friend's Paris phone number. The call travels over the Internet to a server provided by the IP telephony service provider. The server will connect the call to his friend's IP voice device and initiates the call. If his friend has only a regular telephone, the server will connect the call to a gateway in Paris. The gateway in Paris then initiates a call over the public switched telephone network (PSTN) to the local Paris number.

Depending on the Internet connections, there are basically two methods for making calls using an IP voice device: dial-up connections, and direct connections.

With a dial-up connection, a user first calls an ISP (Internet service provider) over a regular dial-up line to set up an Internet connection. Then, he will use the IP voice device handset to dial the phone number of the person he is calling. With a direct or permanent connection, a user places a call using the IP voice device just as he does with the regular telephone. The direct connection indicates a permanent open channel to the Internet such as ISDN, or a cable access device. For dial-up connection call, a phone that has been called won't ring unless the Internet connection is already established for this phone. For direct connection call, a phone would ring like a normal telephone.

European Patent Application, EP-A-0781016, discloses a known internet telephone system. The system disclosed allows a server connected to a called device to use the telephone number of the telephone line connected to the called device, in order to set up the internet telephone call. However, there still needs to be efficient and easily implementable ways to further distinguish whether a call to the called device is an internet call or a regular telephone call, so that the call may be handled correctly and automatically.

### Summary of the Invention

The present applicants recognize that one problem of using dial-up connections for providing IP telephony is that the recipient or the callee of an internet call must be on-line waiting for the IP call. So, the sender (or the caller) will have to first call the recipient using a regular PSTN phone to make the appointment in advance so that the callee is already connected to the internet when the internet call arrives. This defeats the purpose of eliminating the regular telephone call to save money and resources.

Therefore a need has been recognized to provide a method which automatically sets up the internet connection for the receiving IP voice device If it is off line. Accordingly, a method for setting up a voice call 30 over an IP network is described, comprising the steps of:
Initiating an internet voice call to a called device (16, 18), the method characterized in that the further steps of:
   determining whether the called device is already connected to the internet (41);
   initiating a PSTN telephone call with associated caller ID information to the called device, if the called device is not already connected to the internet but is available through PSTN; and
   connecting the called device to the internet in response to the associated caller ID information.

### Brief Description of the Drawings

Fig. 1 is a block diagram of an exemplary system incorporating principles of the present invention.
Fig. 2 is a flowchart illustrating a method of operation of the system shown in Fig. 1.

### Detailed Description of the Invention

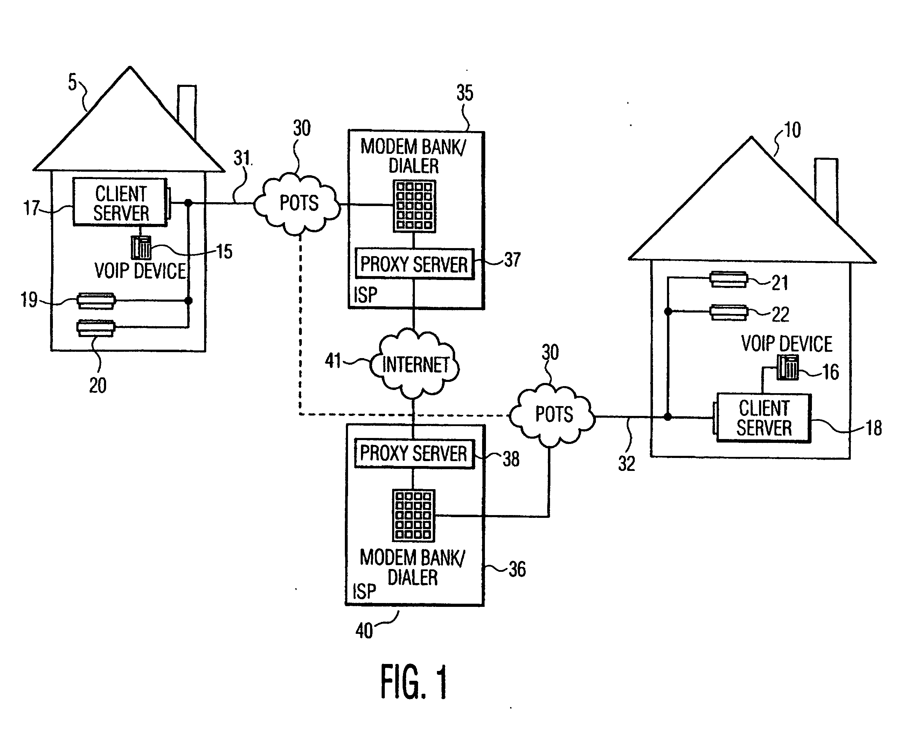

In Fig. 1, there are two households 5 and 10 each with a respective Voice Over IP (VOIP) device 15 and 16. As discussed above, this device may be one of the many devices available on the market today. The VOIP devices 15 and 16 are each connected to a client server 17 or 18 respectively which, for example, may be a PC or a network computer, serving as a client host. for connection to the internet. As discussed above and readily recognized by one skilled in the art, the combination of a VOIP device 15 or 16 and a client server 17 or 18 may be replaced by a multi-media PC with a microphone, speaker, a sound card and an appropriate VOIP software.

The client server 17 or 18 is each connected to the POTS (Plain Old Telephone Service) network or PSTN (Public Services Telephone Network) 30 through dial-up telephone lines as discussed previously.

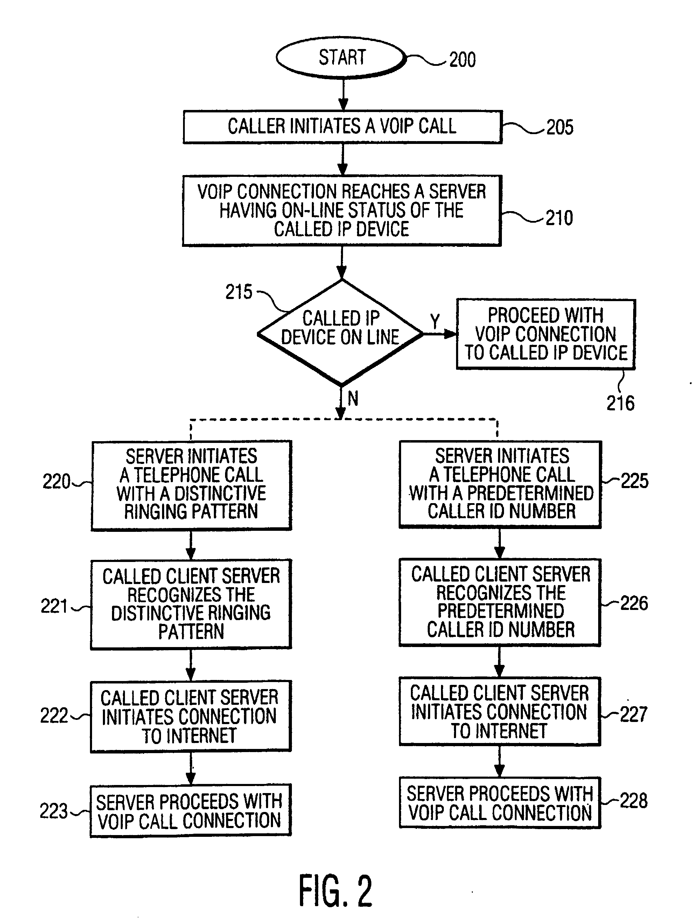

An exemplary process of automatically setting up an internet call is shown in Fig. 2. As shown in Step 205 of Fig. 2, a caller in household 5 first initiates a Voice over IP call to a callee in household 10. In the dial-up configuration of Fig. 1, the client server 17 will have to first be connected to the internet 40. One exemplary way the client server 17 can be connected to the internet 40 is by the caller mannually calling his or her ISP provider 35 using a modem (not shown) in the client server 17. This process of connecting to the ISP provider may also be automated by the client server software in response to the calling VOIP device 15 initiating an internet call.

Once the caller is on the internet through the ISP provider, he can then request a Voice over IP connection to a particular device on the internet. The caller can do that by providing an IP address of the callee he or she wishes to make an internet telephone connection to. This callee's IP address is first transmitted to the proxy server 37 of the ISP 35. The proxy server 37 will then attempt to make an IP connection to the callee's VOIP device, for example, 16 in household 10. The proxy server 37 will attempt to make this connect by first making a connection to the far end proxy server, for example, proxy server 38, serving the callee's VOIP device 16 and the associated client server 18 in household 10.

As shown in Step 210. when the VOIP call reaches the proxy server 38 serving the called IP device 18, the proxy server 38 is able to determine the on-line status of the destination client server 18, since the proxy server 38 is aware of the on-line status of all units it is serving. At Steps 215 and 216, if the called client device 18 is already on-line, the proxy server 18 will proceed with the VOIP call connection between the source and destination client servers 17 and 18. The destination client server 18 will then generate a special IP ring or signal to alert the callee that an IP phone call is coming.

If the client server 18 is off-line as determined by Step 215, the proxy server 38 will send a message back to the caller indicating the lack of immediate availability of the client server 18 and optionally may prompt the caller for an estimated waiting time for establishing the connection, as shown in Step 220. Next, the server initiates a call to the callee over PSTN 30. This will generate a special signal as to be described below in detail to the receiving client server device 18 and the recipient regular telephones. This signal will be recognized as an Internet call setup signal instead of a regular telephone ring signal. After the client server device 18 recognizes this call setup signal, it will dial up ISP 40 to set up the Internet connection. When the Internet connection is successfully set up, the receiving client server device 18 will send an acknowledge message to the proxy server 37 and a communication channel will be set up between the caller and callee. If after some specified time, the calling client 17 server has not received an acknowledgement indicating that the called device 16 or 18 is available, the calling client server 17 will advise the caller to use a normal telephone call.

There are at least two approaches for a client server device to recognize an internet phone call from the proxy server 38 as discussed above.

One exemplary method utilizes the distinct telephone ring patterns for a secondary line such as "teen line", as shown in Step 220. A secondary line such as "teen line" has a unique phone number but shares the same physical line with the main phone number. The ring patterns for the secondary line and primary line are different. The different ring patterns are usually used to distinguish between incoming calls intended for different recipients at one location, e.g., between a call intended for a parent and a call intended for a child. In this method, the proxy server 38 dials the destination device 18 using a "teen line" number. The client server device 18 then recognizes the regular telephone call from the proxy server through the PSTN by detecting the special "teen line" ring pattern, as in Step 221. If the ring signal is a "teen line" ring, the client server device 18 will discontinue the call and dial up the ISP 38 to set up the internet connection in Step 222. The IP phone call can then be started, as in Step 223.

If, on the other hand, the ring signal is a regular ring, the client server 18 will ignore it and it will keep ringing the regular telephone. It should be understood that the user should not pick up a phone when the ring is a "teen line" ring as doing so may interfere with completion of the IP phone call.

Another exemplary method of a client server recognizing an internet phone call utilizes Caller ID information, such as type 1 Caller ID information. Type 1 caller ID information is transmitted during the ringing, off-hook stage of a regular telephone call.
According to this exemplary method, a special phone number is assigned to proxy server 38. As shown in step 225, when the proxy server 38 dials the destination device 18 to alert the callee of an incoming VOIP call, the specially assigned phone number is sent as type 1 Caller ID information. By decoding the Caller ID information at step 226, the destination client server 18 can recognize the incoming call from the proxy server 38. The operations after the call recognition are shown in Fig. 2 as steps 227 and 228 and are the same as described for the first exemplary method described above. It should be understood that the user should not pick up a phone when it rings the first time, as doing so may interfere with reception and recognition of the caller ID information. This limitation is a normal requirement for use of type 1 Caller ID information.

It is to be understood that the embodiments and variations shown and described herein are illustrations only and that various modifications may be implemented by those skilled in the art without departing from the scope of the invention.

## Claims

1. A method for setting up a voice call over internet, comprising the steps of:
initiating an internet voice call to a called device (16, 18), the method **characterized in that** the further steps of:
determining whether the called device is already connected to the internet (41);
initiating a PSTN telephone call with associated caller ID information to the called device, if the called device is not already connected to the internet but is available through PSTN; and
connecting the called device to the internet in response to the associated caller ID information.

2. The method of claim 1 **characterized in that** the associated caller ID information is predetermined caller ID number.

3. A method for setting up an IP voice call through an IP network (41), comprising the steps of:
initiating an IP voice call to a called device (16, 18); the method **characterized in that** the further steps of:
determining whether the called device is connected to the IP network;
initiating a PSTN telephone call with a distinctive ringing pattern to the called device, if the called device is not already connected to the IP network but is available through PSTN; and
connecting the called device to the IP network in response to the distinctive ringing pattern.

4. The method of claim 3 **characterized in that** the distinctive ringing pattern is different from the ringing pattern of a regular PSTN telephone call.

5. A method for indicating that an internet communication has arrived at a device connected to a PSTN line, **characterized in that** it comprises the steps of:
receiving a caller ID telephone number through the PSTN line;
recognizing when the received caller ID telephone number is a predetermined telephone number; and
when the received caller ID telephone number matches the predetermined telephone number, initiating connection to an internet communication waiting to be processed.

6. The method of claim 5 **characterized in that** it comprises the step of processing the internet communication in response to the arrival indication.

## Patentansprüche

1. Verfahren zum Aufbau eines Anrufs über Intemet mit folgenden Schritten:
Einleitung eines Internet-Anrufs zu einem angerufenen Gerät (16, 18), **gekennzeichnet durch** folgende Schritte:
Ermittlung, ob das angerufene Gerät bereits mit dem Internet (41) verbunden ist,
Einleitung eines PSTN-Telefonanrufs mit zugehörigen Anrufer-ID-Informationen zu dem angerufenen Gerät, wenn das angerufene Gerät noch nicht mit dem Internet verbunden, jedoch über PSTN verfügbar ist, und
Verbindung des angerufenen Geräts mit dem Internet aufgrund der zugehörigen Anrufer-ID-lnformationen.

2. Verfahren nach Anspruch 1, **dadurch gekennzeichnet, dass** die zugehörigen Anrufer-ID-Informationen in der vorbestimmten ID-Nummer des Anrufers bestehen.

3. Verfahren zum Aufbau eines IP-Anrufs über ein IP-Netz (41) mit folgenden Schritten:
Einleitung eines IP-Anrufs zu einem angerufenen Gerät (16, 18),
**gekennzeichnet durch** folgende Schritte:
Ermittlung, ob das angerufene Gerät mit dem IP-Netz verbunden ist,
Einleitung eines PSTN-Telefonanrufs mit einem charakteristischen Läutemuster zu dem angerufenen Gerät, wenn das angerufene Gerät noch nicht mit dem IP-Netz verbunden, jedoch über PSTN verfügbar ist, und
Verbindung des angerufenen Geräts mit dem IP-Netz aufgrund des charakteristischen Läutemusters.

4. Verfahren nach Anspruch 3, **dadurch gekennzeichnet, dass** das charakteristische Läutemuster sich von dem Läutemuster eines üblichen PSTN-Telefonanrufs unterscheidet.

5. Verfahren zur Anzeige, dass eine Internet-Kommunikation bei einem mit einer PSTN-Leitung verbundenen Gerät angekommen ist, **gekennzeichnet durch** folgende Schritte:
Empfang einer Anrufer-lD-Telefonnummer über die PSTN-Leitung,
Erkennung, wenn die empfangene Anrufer-ID-Telefonnummer eine vorbestimmte Telefonnummer ist, und
Einleitung einer Verbindung zu einer auf die Verarbeitung wartenden Internet-Kommunikation, wenn die empfangene Anrufer-ID-Telefonnummer mit der vorbestimmten Telefonnummer übereinstimmt.

6. Verfahren nach Anspruch 5, **gekennzeichnet durch** den Schritt der Verarbeitung der Intemet-Kommunikation aufgrund der Ankunftsanzeige.

## Revendications

1. Procédé d'établissement d'un appel vocal sur l'Internet, comprenant les étapes de :
lancement d'un appel vocal Internet vers un dispositif appelé (16, 18), le procédé étant **caractérisé par** les autres étapes de :
détermination si le dispositif appelé est déjà connecté à l'Internet (41) ;
lancement d'un appel téléphonique PSTN avec des informations d'identité d'appelant associées vers le dispositif appelé, si le dispositif appelé n'est pas déjà connecté à l'Internet mais est disponible par le PSTN ; et
connexion du dispositif appelé à l'Internet en réponse aux informations d'identité d'appelant associées.

2. Procédé selon la revendication 1, **caractérisé en ce que** les informations d'identité d'appelant associées sont un numéro d'identité d'appelant prédéterminé.

3. Procédé d'établissement d'un appel vocal IP par le biais d'un réseau IP (41) comprenant les étapes de :
lancement d'un appel vocal IP vers un dispositif appelé (16, 18) ; le procédé étant **caractérisé par** les autres étapes de :
détermination si le dispositif appelé est connecté au réseau IP ;
lancement d'un appel téléphonique PSTN avec une sonnerie distinctive vers le dispositif appelé, si le dispositif appelé n'est pas déjà connecté au réseau IP mais est disponible par le PSTN ; et
connexion du dispositif appelé au réseau IP en réponse à la sonnerie distinctive.

4. Procédé selon la revendication 3, **caractérisé en ce que** la sonnerie distinctive est différente de la sonnerie d'un appel téléphonique PSTN normal.

5. Procédé pour indiquer qu'une communication Internet est arrivée au niveau d'un dispositif connecté à une ligne PSTN, **caractérisé en ce qu'**il comprend les étapes de :
réception d'un numéro téléphonique d'identité d'appelant par la ligne PSTN ;
reconnaissance du numéro téléphonique d'identité d'appelant reçu comme étant un numéro téléphonique prédéterminé ; et
quand le numéro téléphonique d'identité d'appelant reçu correspond au numéro téléphonique prédéterminé, lancement d'une connexion avec une communication Internet attendant d'être traitée.

6. Procédé selon la revendication 5, **caractérisé en ce qu'**il comprend l'étape de traitement de la communication Internet en réponse à l'indication d'arrivée.
